(19) Europäisches Patentamt
European Patent Office
Office européen des brevets

(11) **EP 2 623 936 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(21) Anmeldenummer: **13000154.8**

(22) Anmeldetag: **12.01.2013**

(51) Int Cl.:
***G01D 5/00*** *(2006.01)*

(54) **Sensorsignalverarbeitungseinheit und ein Verfahren zur Verarbeitung eines Sensorsignals**

Sensor signal processing unit and a method for processing a sensor signal

Unité de traitement de signaux de capteur et procédé de traitement d'un signal de capteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2012 DE 102012001966**

(43) Veröffentlichungstag der Anmeldung:
**07.08.2013 Patentblatt 2013/32**

(73) Patentinhaber: **Robert Bosch GmbH**
**70442 Stuttgart (DE)**

(72) Erfinder:
• **Klyne, Andreas**
**71254 Ditzingen (DE)**
• **Strohm, Peter**
**74388 Talheim (DE)**

(74) Vertreter: **Wiesmann, Stephan**
**Bosch Rexroth AG**
**DC/IPR**
**Zum Eisengießer 1**
**97816 Lohr am Main (DE)**

(56) Entgegenhaltungen:
| | |
|---|---|
| EP-A1- 1 796 257 | EP-A2- 0 877 464 |
| EP-A2- 0 997 701 | DE-A1-102011 009 720 |
| FR-A1- 2 923 903 | US-A- 5 160 886 |
| US-A1- 2004 217 758 | |

**Beschreibung**

Die vorliegende Erfindung bezieht sich auf eine Sensorsignalverarbeitungseinheit und ein Verfahren zur Verarbeitung eines Sensorsignals gemäß den Hauptansprüchen.

In herkömmlichen Sensorsignalverarbeitungseinheiten wie beispielsweise einem Differenzialdrossel-Positionssensor wird ein ferromagnetisches Element wie beispielsweise ein Weicheisenkern zwischen zwei Spulen oder allgemeiner Induktivitäten verschoben, wobei die Länge des Kerns in etwa einer Spulenlänge entspricht. Bei einer Erregung der beiden Spulen beispielsweise mit einer Rechteckspannung und einem Abgriff eines Signals zwischen den beiden in Serie geschalteten Spulen kann somit ein Signal erhalten werden, welches der Position des Kerns zwischen den beiden Spulen bereits recht gut entspricht. Dennoch kann durch Rauschen dieses erhaltenen Signals lediglich ein bestimmter Positionsbereich bestimmt werden, in dem sich der Kern befindet. Eine hochpräzise Bestimmung der Position des Kerns zwischen den beiden Spulen ist somit nicht immer gewährleistet. Weiterhin kann durch die einfache Anordnung Sensorfehler wie beispielsweise ein Kabelbruch im Nutzbereich des Signals maskiert sein.

Die Druckschrift EP 0 877 464 A2 offenbart einen Ansatz, bei dem ein Signal vom Drehmelder mit veränderbarem Reluktanz zum digitalen Umrichter geleitet wird.

Die Druckschrift DE 10 2011 009 720 A1 offenbart eine Drehmelder-Baugruppe und ein Verfahren zur Bestimmung der Winkellage eines Rotors.

Die Druckschrift US 5,160,886 offenbart einen Permanentmagnet-Drehwandler zur Bereitstellung eines Ausgabesignals, das kompatibel zu einem Drehwandler-zu-digitalem-Umrichter ist.

Die Druckschrift EP 1 796 257 A1 offenbart einen Lagegeber und ein Steuergerät für einen Synchronmotor, das einen solchen Lagegeber benutzt.

Die Druckschrift FR 2 923 903 A1 offenbart einen gegen externe Felder unempfindlichen Winkel- oder Linearmagnet-Positionssensor.

Die Druckschrift US 2004/217758 A1 offenbart einen elektromagnetischen Wellenpositionssensor und ein entsprechendes Verfahren.

Die Druckschrift EP 0 997 701 A2 offenbart ein Offset-kompensiertes Winkelmesssystem.

Es ist die Aufgabe der vorliegenden Erfindung, eine verbesserte Sensorsignalverarbeitungseinheit und ein verbessertes Verfahren zur Verarbeitung eines Sensorsignals zu schaffen.

Diese Aufgabe wird durch eine Sensorsignalverarbeitungseinheit und ein Verfahren zur Verarbeitung eines Sensorsignals gemäß den Hauptansprüchen gelöst.

Die vorliegende Erfindung schafft eine Sensorsignalverarbeitungseinheit mit folgenden Merkmalen:

- einer Schnittstelle zum Einlesen eines ersten Sensorsignals und zweiten Sensorsignals, wobei das erste und das zweite Sensorsignal eine identische physikalische Größe repräsentieren und wobei bei einem ersten Wert der physikalischen Größe das erste Sensorsignal ein Maximum aufweist und bei einem vom ersten Wert unterschiedlichen zweiten Wert der physikalischen Größe das zweite Sensorsignal ein Maximum aufweist;

- einer Sensorsignalaufbereitungseinheit, die ausgebildet ist, um eine Sensorsignalauswertungsgröße auf der Basis einer ersten und mindestens einer zweiten Komponente zu ermitteln, wobei die erste Komponente der Sensorsignalauswertungsgröße durch einen Signalwert des ersten Sensorsignals gebildet ist und die zweite Komponente der Sensorsignalauswertungsgröße durch einen Signalwert des zweiten Sensorsignals gebildet ist, wobei der erste und der zweite Signalwert zu einem identischen Zeitpunkt aufgenommen wurden; und

- einer Sensorsignalauswertungseinheit, die ausgebildet ist, um die dem ersten und zweiten Sensorsignal zugrunde liegende physikalische Größe unter Verwendung der Sensorsignalauswertungsgröße zu ermitteln.

Ferner schafft die vorliegende Erfindung ein Verfahren zur Verarbeitung zumindest zwei Sensorsignalen, wobei das Verfahren die folgenden Schritte aufweist:

- Einlesen eines ersten Sensorsignals und zweiten Sensorsignals, wobei das erste und das zweite Sensorsignal eine identische physikalische Größe repräsentieren und wobei bei einem ersten Wert der physikalischen Größe das erste Sensorsignal ein Maximum aufweist und bei einem vom ersten Wert unterschiedlichen zweiten Wert der physikalischen Größe das zweite Sensorsignal ein Maximum aufweist;

- Ermitteln einer Sensorsignalauswertungsgröße auf der Basis einer ersten und einer zweiten Komponente, wobei die erste Komponente der Sensorsignalauswertungsgröße durch einen Signalwert des ersten Sensorsignals gebildet ist und die zweite Komponente der Sensorsignalauswertungsgröße durch einen Signalwert des zweiten Sensorsignals gebildet ist, wobei der erste und der zweite Signalwert zu einem identischen Zeitpunkt aufgenommen wurden; und

- Bestimmen der dem ersten und zweiten Sensorsignal zugrunde liegende physikalische Größe unter Verwendung der Sensorsignalauswertungsgröße.

Unter einer Sensorsignalverarbeitungseinheit oder allgemein einer hier eingesetzten Vorrichtung kann vorliegend ein elektrisches Gerät bzw. Steuer- oder Datenverarbeitungsgerät verstanden werden, das Sensorsignale empfängt und hieraus eine dem Sensorsignal zugrunde liegende physikalische Größe ableitet und/oder bereitstellt. Die Sensorsignalverarbeitungseinheit kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des vorstehend genannten Verfahrens und/oder einer Variante davon verwendet, wird, wenn das Programm auf einem Computer oder einer Vorrichtung ausgeführt wird.

Unter einem Sensorsignal kann ein Signal eines Messwandlers verstanden werden, der eine physikalische Größe in beispielsweise ein elektrisches Signal wandelt. Die physikalische Größe kann beispielsweise eine Wegstrecke, ein Druck oder eine andere Größe sein, die sehr präzise zu bestimmen ist. Unter einer Sensorsignalauswertungsgröße kann ein Wert verstanden werden, für dessen Erhalt eine Verknüpfung von zwei oder mehr Sensorsignalwerten erforderlich ist. Beispielsweise kann als Sensorsignalauswertungsgröße ein Sensorsignalauswertungspunkt in einem Sensorsignalraum als ein Tupel von zumindest zwei Werten verstanden werden, die zusammen einen Abbildungspunkt in einer zweidimensionalen Ebene oder einem mehrdimensionalen Raum repräsentieren. Unter einer Komponente (oder Koordinate) eine Sensorsignalauswertungsgröße kann einer von mehreren Werten verstanden werden, die die Sensorsignalauswertungsgröße in der zweidimensionalen Auswertungsebene oder einem mehrdimensionalen Auswertungsraum bestimmen. Unter einem identischen Zeitpunkt kann ein Zeitpunkt verstanden werden, zudem sowohl der erste als auch der zweite Signalwert erfasst, aufgenommen und/oder aufgezeichnet wurden.

Die vorliegende Erfindung basiert auf der Erkenntnis, dass eine Verbesserung der Präzision oder Genauigkeit bei der Bestimmung einer physikalischen Größe eine Sensorsignalaufbereitung verwendet werden kann, bei der die Erkennung der physikalischen Größe auf der Basis von zumindest zwei Sensorsignalen erfolgt, die die identische physikalische Größe repräsentieren, jedoch bei unterschiedlichen Werten physikalische Größe Maxima aufweisen. Dies kann beispielsweise bedeuten, dass die beiden Sensorsignale eine um einen Offset oder Versatz gegeneinander verschobene aber ansonsten gleiche geometrische Form aufweisen, beispielsweise sich als Sinussignal beschreiben lassen. Werden ein Signalwert des ersten Sensorsignals und ein Signalwert des zweiten Sensorsignals, welche zum gleichen Zeitpunkt aufgenommen wurden, in einer zweidimensionalen Ebene oder einem mehrdimensionalen Raum eingetragen, so dass ein Sensorsignalauswertungspunkt beziehungsweise ein Winkel zwischen einem solchen Auswertungspunkt und einem Referenzpunkt entsteht (also eine Sensorsignalauswertungsgröße gebildet wird), lässt sich durch die Analyse oder allgemein die Verwendung dieser Sensorsignalauswertungsgröße eine deutlich höhere Präzision bei der Ermittlung der zu bestimmenden physikalischen Größe erreichen, als wenn lediglich das jeweilig einzelnes Sensorsignal ausgewertet und hieraus die physikalische Größe bestimmt werden würde.

Die vorliegende Erfindung bietet den Vorteil, dass durch einen geringfügig höheren Aufwand durch die Verwendung von (günstiger Weise gleichartigen) kostengünstigen Sensoren zur Bereitstellung des ersten und zweiten Sensorsignals, und einer optimierten Verarbeitung der zumindest zwei Sensorsignale eine deutlich präzisere Bestimmung der physikalischen Größe möglich wird. Desweiteren lässt sich insbesondere in Systemen mit erhöhtem Sicherheitsbedarf ein deutliches Plus an Systemfunktionalität bzw. -robustheit erreichen.

Gemäß einer vorteilhaften Ausführungsform der vorliegenden Erfindung kann die Sensorsignalaufbereitungseinheit ausgebildet sein, um als erstes und zweites Sensorsignal Sensorsignale zu verwenden, die innerhalb eines Toleranzbereichs eine gleiche Form aufweisen, wobei die Sensorsignale jedoch einen Versatz zueinander aufweisen. Beispielsweise kann der Toleranzbereich als ein Band um das erste Sensorsignal verstanden werden, in dem die Werte des zweiten Sensorsignals liegen. Ein solcher Toleranzbereich kann typischerweise eine Abweichung der Form des zweiten Sensorsignals um nicht mehr als zwanzig Prozent, insbesondere um nicht mehr als zehr Prozent, weiter bevorzugt um nicht mehr als fünf Prozent von der Form des ersten Sensorsignals verstanden werden. Eine derartige Ausführungsform der vorliegenden Erfindung bietet den Vorteil, dass die physikalische Größe in beiden Sensorsignalen in gleichartiger Weise enthalten ist, sodass mögliche systematische Messfehler in beiden Sensorsignalen auf gleiche Weise wirken und sich hierdurch kompensieren lassen. Durch die Erzeugung des Versatzes zwischen den beiden Sensorsignalen kann somit ein Informationsgewinn in den beiden Sensorsignalen geschaffen werden, der bei der Auswertung eine Erhöhung des Signal-Rausch-Verhältnisses der zu bestimmenden physikalischen Größe ermöglicht.

Günstig ist es ferner, wenn gemäß einer weiteren Ausführungsform der vorliegenden Erfindung die Sensorsignalauswertungseinheit ausgebildet ist, um als Sensorsignalauswertungsgröße einen Winkel zwischen dem Sensorsignalauswertungspunkt und einem Referenzpunkt und einer Referenzgeraden durch den Referenzpunkt in dem Sensorsignalraum zu bestimmen, wobei insbesondere der Sensorsignalraum durch das erste und zweite Sensorsignal aufgespannt wird und die erste Komponente eine erste Koordinate des Sensorsignalauswertungspunkts und die zweite Komponente eine zweite Koordinate des Sensorsignalauswertungspunkts bilden, wobei insbesondere im Referenzpunkt der Wert des ersten und zweiten Sensorsignals null beträgt, und wobei die Sensorsignalauswertungseinheit ausgebildet ist, um die physikalische Größe unter Verwendung des bestimmten Winkels zu ermitteln. Eine derartige Ausführungsform der vorliegenden Erfindung bietet den Vorteil, dass durch die Verwendung des Winkels bei der Bestimmung der physikalischen Größe ein radiales Rauschen, d. h. eine Schwankung der Sensorsignale, die in Richtung zwischen dem Referenzpunkt und dem Sensorsignalauswertungspunkt wirkt, keine störende Wirkung mehr entfaltet. Dies ermöglicht, die Präzision der physikalischen Größe mit einfachen Mitteln zu erhöhen.

Gemäß einer anderen Ausführungsform der vorliegenden Erfindung kann die Sensorsignalauswertungseinheit ausgebildet sein, um den Winkel unter Verwendung einer trigonometrischen Funktion, insbesondere unter Verwendung einer Tangensfunktion zu ermitteln. Eine derartige Ausführungsform der vorliegenden Erfindung bietet den Vorteil einer technisch sehr einfachen Umsetzung der Ermittlung des Winkels zwischen dem Referenzpunkt und dem Sensorsignalauswertungspunkt und einer Referenzgeraden durch den Referenzpunkt.

Auch kann gemäß einer weiteren Ausführungsform der vorliegenden Erfindung die Sensorsignalauswertungseinheit ausgebildet sein, um das Sensorsignal als fehlerhaft zu identifizieren, wenn sich die Sensorsignalauswertungsgröße außerhalb eines vordefinierten Gültigkeitsbereichs befindet. Eine solche Ausführungsform der vorliegenden Erfindung bietet den Vorteil einer technisch sehr einfach umzusetzenden Validierungsmöglichkeit für die erhaltenen Werte aus den Sensorsignalen. Wird eine Sensorsignalauswertungsgröße als fehlerhaft identifiziert, kann er für eine Bestimmung der physikalischen Größe verworfen werden und stattdessen eine Fehlermeldung ausgegeben werden. Unter einem Gültigkeitsbereich kann dabei ein Bereich in der Auswertungsebene oder dem Auswertungsraum verstanden werden, in dem im korrekt funktionierenden Sensorsystem keine Sensorsignalwerte auftreten sollten. Beispielsweise können Werte der Sensorsignale, die außerhalb eines solchen Gültigkeitsbereichs liegen, einen Hinweis auf einen Defekt in einem der Messwandler geben, die zur Bereitstellung der Sensorsignale vorgehalten werden.

Besonders vorteilhaft ist es dabei, wenn die Sensorsignalauswertungseinheit ausgebildet ist, um die Sensorsignalauswertungsgröße bereits als fehlerhaft zu identifizieren, wenn zumindest eine Komponente der Sensorsignalauswertungsgröße außerhalb eines Gültigkeitswertebereiches liegt. Eine derartige Ausführungsform der vorliegenden Erfindung bietet den Vorteil, dass Fehlerzustände, welche im Nutzbereich einer Signalkomponente maskiert sind, entdeckt werden können.

Besonders vorteilhaft ist es, wenn die Sensorsignalverarbeitungseinheit gemäß einer vorstehend genannten Variante zusammen mit Sensoren zur Sensorsignalbereitstellung verwendet wird. Gemäß einer Ausführungsform der vorliegenden Erfindung wird somit eine Sensoreinheit mit folgenden Merkmalen geschaffen:

- einer ersten und einer zweiten Induktivität, die mit einem ersten beweglichen ferromagnetischen Element gekoppelt sind, wobei die erste und zweite Induktivität ausgebildet sind, um das erste Sensorsignal bereitzustellen;

- einer dritten und einer vierten Induktivität, die die mit einem zweiten beweglichen ferromagnetischen Element gekoppelt sind, wobei die erste und zweite Induktivität ausgebildet sind, um das zweite Sensorsignal bereitzustellen, wobei das erste und zweite ferromagnetische Element derart angeordnet sind, um eine identische physikalische Größe zu erfassen und bei einer Änderung der physikalischen Größe als erstes und zweites Sensorsignal eine um einen Offset versetze gleiche Form eines Sensorsignalverlaufes bereitzustellen; und

- einer Sensorsignalverarbeitungseinheit gemäß einem der vorangegangenen Ansprüche.

Besonders aussagekräftig und dabei gut unterscheidbar sind die Sensorsignale dann, wenn die erste und zweite Induktivität in einer ersten Serienschaltung und die dritte und vierte Induktivität in einer zweiten Serienschaltung verschaltet sind, wobei die erste und zweite Serienschaltung parallel geschaltet sind.

Um eine möglichst stabile Kopplung und somit eine zuverlässig arbeitende Sensoreinheit zu schaffen, die auch über eine lange Betriebsdauer fehler- und möglichst wartungsfrei funktioniert, kann gemäß einer besonderen Ausführungsform der vorliegenden Erfindung das erste und zweite ferromagnetische Element an einem gemeinsamen Stab befestigt sein.

Um einen Druck als physikalische Größe sehr effizient und hochgenau zu bestimmen, kann auch gemäß einer anderen Ausführungsform der vorliegenden Erfindung das erste und zweite ferromagnetische Element je an einer Druckkammer befestigt sein, wobei insbesondere die Druckkammern fluidisch miteinander verbunden sind. Auf diese Weise kann der Druck in den unterschiedlichen Druckkammern als identische physikalische Größe mit zwei ferromagnetischen Elementen erfasst werden, die in je einer Doppelinduktivität angeordnet sind und je eines der Sensorsignale liefern.

Die Erfindung wird nachstehend anhand der beigefügten Zeichnungen beispielhaft näher erläutert. Es zeigen:

Fig. 1      Darstellungen einer Sensorsignalverarbeitungseinheit gemäß einem Ausführungsbei-

Fig. 2 eine schematische Anordnung von Spulen eines Positionsmessungs-Sensorsystems zur Verwendung in einem Ausführungsbeispiel der vorliegenden Erfindung mit zwei in den Spulen beweglich angeordneten Weicheisenkernen als ferromagnetische Elemente;

Fig. 3a eine erste elektrische Verschaltungsmöglichkeit der Spulen gemäß Fig. 2;

Fig. 3b zwei Diagramme zur Darstellung eines beispielhaften Erregerspannungsverlaufs, der an den Einspeisepunkten der Schaltung aus Fig. 3a angelegt werden kann;

Fig. 3c drei Diagramme zur Erläuterung der Bildung der Sensorsignale unter Berücksichtigung der Erregungssignale der Induktivitäten gemäß einem Ausführungsbeispiel der vorliegenden Erfindung;

Fig. 4 eine schematische Anordnung von Spulen eines Druckmessungs-Sensorsystems zur Verwendung in einem Ausführungsbeispiel der vorliegenden Erfindung mit zwei in den Spulen beweglich angeordneten Weicheisenkernen als ferromagnetische Elemente;

Fig. 5 ein Diagramm von Sensorsignalverläufen über die Position, die zur Bestimmung der physikalischen Größe verwendbar sind;

Fig. 6a ein Diagramm zur Verdeutlichung der Auswertungsmöglichkeit von zumindest zwei Sensorsignalen gemäß einem Ausführungsbeispiel der vorliegenden Erfindung;

Fig. 6b ein weiteres Diagramm zur Verdeutlichung der Auswertungsmöglichkeit von zumindest zwei Sensorsignalen gemäß einem Ausführungsbeispiel der vorliegenden Erfindung;

Fig. 7 ein weiteres Diagramm zur Verdeutlichung der Auswertungsmöglichkeit von zumindest zwei Sensorsignalen gemäß einem Ausführungsbeispiel der vorliegenden Erfindung; und

Fig. 8 ein Ablaufdiagramm eines Ausführungsbeispiels der vorliegenden Erfindung als Verfahren.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

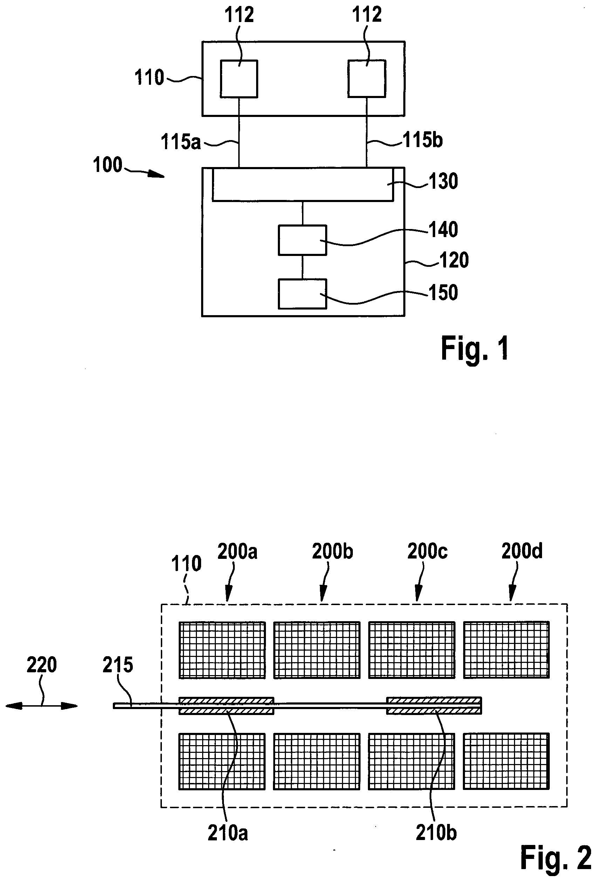

Fig. 1 zeigt ein Blockschaltbild einer Sensoreinheit 100 gemäß einem Ausführungsbeispiel der vorliegenden Erfindung. Die Sensoreinheit 100 weist ein Sensorsystem 110 mit zumindest zwei Sensoren 112 zur Lieferung von zumindest zwei Sensorsignalen 115a bzw.

115b und eine Sensorsignalverarbeitungseinheit 120 auf, die ausgebildet ist, um die von den Sensoren 112 des Sensorsystems 110 gelieferten Sensorsignale 115a bzw. 115b zu verarbeiten. Hierzu verfügt die Sensorsignalverarbeitungseinheit 120 über eine Schnittstelle 130 zum Einlesen des ersten und zweiten Sensorsignals 115a bzw. 115b, eine Sensorsignalaufbereitungseinheit 140 zum Ermitteln eines Sensorsignalauswertungspunktes, wie es nachfolgend noch detaillierter erläutert wird und über eine Sensorsignalauswertungseinheit 150, die ausgebildet ist, um die physikalische Größe unter Verwendung des Sensorsignalauswertungspunktes zu bestimmen, wie es nachfolgend ebenfalls noch näher erläutert wird.

Um nun beispielsweise eine Position bzw. eine Wegstrecke als physikalische Größe zu messen, die ein Weggeber zurückgelegt hat, kann das Sensorsystem 110 gemäß der Anordnungsskizze aus der Fig. 2 aufgebaut sein. Aus der Fig. 2 ist ersichtlich, dass das Sensorsystem vier Spulen 200a-d (Induktivitäten) aufweist, die in einer Reihe angeordnet sind. In diesen Spulen 200a-d sind zwei Weicheisenkerne 210a und 210b (als ferromagnetisches Element) angeordnet, die einerseits auf einem gemeinsamen Stab 215 befestigt sind und andererseits in eine lineare Bewegungsrichtung 220 in oder aus der in Reihe angeordneten Spulen 200 beweglich sind. Alle vier Spulen 200a-d haben eine gleiche Länge und eine gleiche Wicklungsanzahl Die beiden Weicheisenkerne 210a und 210b können dabei als geteilter Weicheisenkern 210 betrachtet werden, der eine Lücke der Länge a aufweist, wobei die beiden Weicheisenkerne 210a und 210b von gleicher Länge I sind. Die Lücke a zwischen den beiden Weicheisenkernen 210a und 210b ist dabei so groß, dass der erste Weicheisenkern 210a in Bezug auf die erste 200a und zweite Spule 200b anders liegt, als der zweite Weicheisenkern 210b in Bezug auf die dritte 200c und vierte Spule 200d. Dies bedeutet nichts anderes, als dass der zweite Weicheisenkern 210b einen Versatz in Bezug auf seine Lage in dem aus der dritten 200c und vierten Spule 200d gebildeten Spulenpaar aufweist, verglichen mit der Lage des ersten Weicheisenkerns 210a in Bezug auf seine Lage in dem aus der ersten 200a und zweiten 200b Spule gebildeten Spulenpaar.

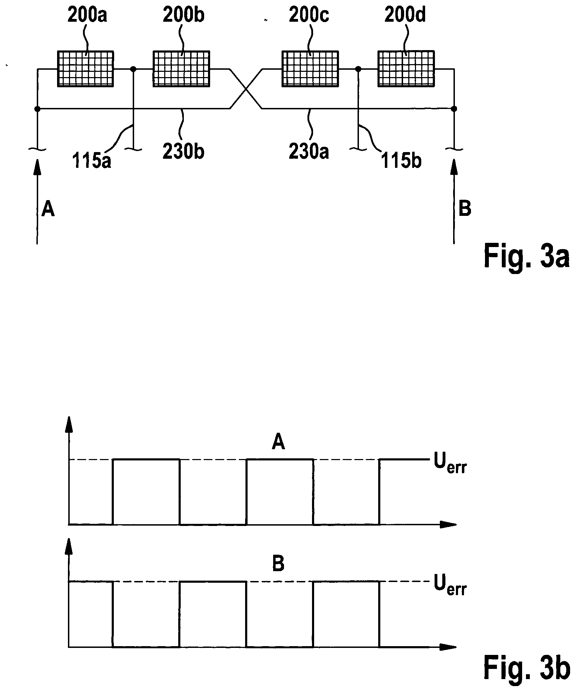

Um nun das erste und zweite Sensorsignal 115a bzw. 115b abgreifen zu können, werden die vier Spulen 200 nun elektrisch miteinander verschaltet. Beispielsweise werden gemäß einem in Fig. 3a dargestellten ersten Schaltbild die erste Spule 200a und die zweite Spule 200b in einer ersten Serienschaltung 230 verschaltet wogegen die dritte 200c und vierte 200d Spule in einer zweiten Serienschaltung 230b verschaltet werden. Die erste Serienschaltung 230a ist ferner zur zweiten Serienschaltung 230b parallel geschaltet. Wird nun zwischen den Klemmen A und B der als Sensorsystem 110 verschalteten Spulen 200a-d beispielsweise eine Rechteckspannung angelegt, wie die in der Fig. 3b in einem Diagramm für den Verlauf von Spannungspegeln der zwischen den Klemmen A und B angelegten Spannung (beispielsweise $\pm 5V$, bei einem Tastverhältnis von 50%) abgebildet ist, lässt sich an dem Abgriff zwischen den Spulen der ersten Serienschaltung 230a das erste Sensorsignal 115a abgreifen. Das zweite Sensorsignal 115b lässt sich an dem Abgriff zwischen den Spulen der zweiten Serienschaltung 230b abgreifen. Die Serienschaltungen 230a und 230b können dabei als Sensoren 112 betrachtet werden, die die Sensorsignale 115a und 115b liefern. Die in der Fig. 3a dargestellte Verschaltung der Spulen 200 des Sensorsystems bieten insbesondere für eine Lage der Weicheisenkerne 210 im Inneren der in der Fig. 2 dargestellten Anordnung der vier Spulen 200 eine besonders hohe Messqualität.

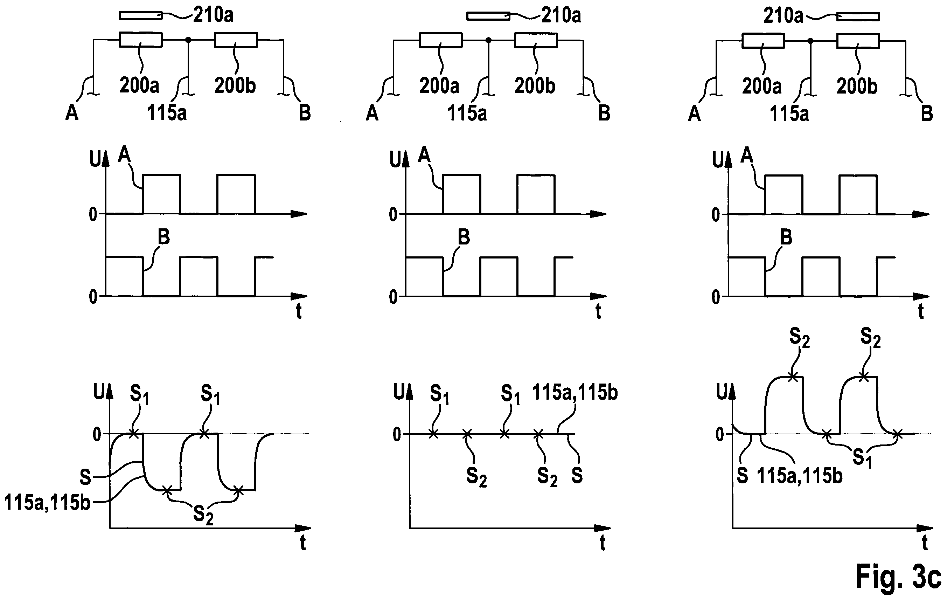

Wie die Sensorsignale 115a und 115b erhalten werden, ist in der Fig. 3c näher dargestellt, wobei die Sensorsignalermittlung auf die erste der Serienschaltungen 230a beschränkt wurde. Die Erzeugung des zweiten Sensorsignals 115b in der zweiten Serienschaltung 230b erfolgt auf analoge Weise, wobei auf die Erläuterung dieser Ermittlung dieses Sensorsignals 115b aus Gründen der Übersichtlichkeit nicht näher eingegangen wurde. In den drei Teilfiguren in dem oberen Bereich der Fig. 3c ist je eine andere Position des Kerns 210 in Bezug auf die erste und zweite Spule 200a bzw. 200b dargestellt. In den drei Diagrammen im mittleren Bereich der Fig. 3c sind Spannungsverläufe der Erregungssignale an den Klemmen A und B eingetragen, die jeweils die Spannungen an den Klemmen A und B gegenüber einem gemeinsamen Massepotential repräsentieren. In den Diagrammen im unteren Bereich der Fig. 3c sind Spannungsverläufe eingetragen, die an dem Abgriffspunkt des ersten Sensorsignals 115a zwischen der ersten Spule 200a und der zweiten Spule 200b bei Erregung der ersten Serienschaltung 230a mit den in der Fig. 3c darüber dargestellten Erregungssignalen erhalten werden. Das Sensorsignal S bzw. 115a wird in diesem Fall aus der Spannungsdifferenz der Sample-Werte $S_1$ und $S_2$ nach der Formel $S = S_2 - S_1$ berechnet, wobei die Spannung an $S_1$ und $S_2$ gegenüber einem gemeinsamen Massepotential gemessen werden. Für hohe Präzision sind die Sampel-Punkte $S_T$ und $S_2$ synchron und jitterfrei zum Signalverlauf der Erregungsspannung abzutasten. Wie aus der Fig. 3c ersichtlich ist, resultiert in der linken Darstellung der Fig. 3c bei einem ganz nach links verschobenen Kern 210a eine Sensorsignalspannung von kleiner null, wogegen entsprechend der mittleren Darstellung der Fig. 3c bei einem mittig angeordneten Kern 210a eine Sensorsignalspannung von gleich null und entsprechend der rechten Darstellung der Fig. 3c bei einem ganz nach rechts verschobenen Kern 210a eine Sensorsignalspannung von größer null resultiert.

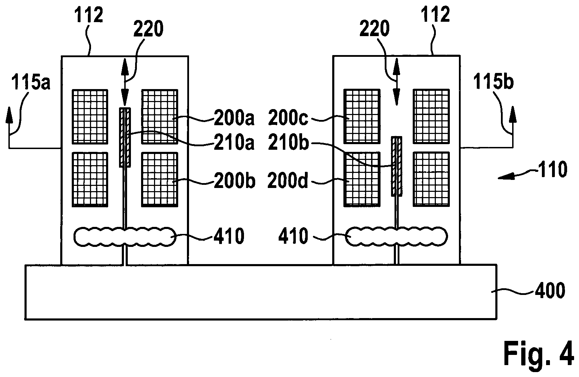

Alternativ kann das Sensorsystem 110 auch als Druckmesssystem ausgelegt sein, wie es in der Fig. 4 schematisch als Anordnungsskizze abgebildet ist. Dabei ist ein gemeinsamer Druckraum 400 mit einem Druck p als fluidische Verbindung vorhanden, der beispielsweise zwei getrennte Druckmessdosen 410 als Messumformer miteinander verbindet. Diese Druckmessdosen 410 weisen jeweils einen Stab mit einem daran befestigten Weicheisenkern 210a bzw. 210b auf, die sich bei einer Druckänderung $\Delta p$ im Druckraum 400 bewegen können. Diese Weicheisenkerne 210 sind ebenfalls wieder in zwei Spulen 200 angeordnet, die miteinander entsprechend der Fig. 3a verschaltet sind. Diese vier Spulen 200, die als jeweils zwei getrennte Systeme von je zwei Spulen 200 angeordnet sind, weisen dabei auch beide eine identische Länge bei gleicher Wicklungsanzahl auf. Die Erregungsspannung kann gemeinsam oder getrennt an die beiden Spulenpärchen angelegt werden, beispielsweise entsprechend der Erregung des Positionssensors bei einer Verschaltung gemäß der Fig. 3a. Das erste Sensorsignal 115a wird vom als erstem Sensor 112 verschalteten Spulenpaar mit der ersten und zweiten Spule 200a bzw. 200b geliefert, wogegen das zweite Sensorsignal 115b vom zweiten Spulenpaar mit der dritten und vierten Spule 200c bzw. 200d geliefert wird. Dabei weisen die Weicheisenkerne als ferromagnetische Elemente 210a bzw. 210b eine gleiche Länge auf, sind jedoch derart unterschiedlich in den Spulen 200 angeordnet, dass ein Phasenversatz von ungleich null Grad, bevorzugt von 90 Grad zwischen dem ersten und zweiten Sensorsignal 115a bzw. 115b resultiert. Das erste und zweite Sensorsignal weist somit an unterschiedlichen Stellen (d. h. Auslenkungsweglängen der Druckmessdosen 410) ein Maximum auf.

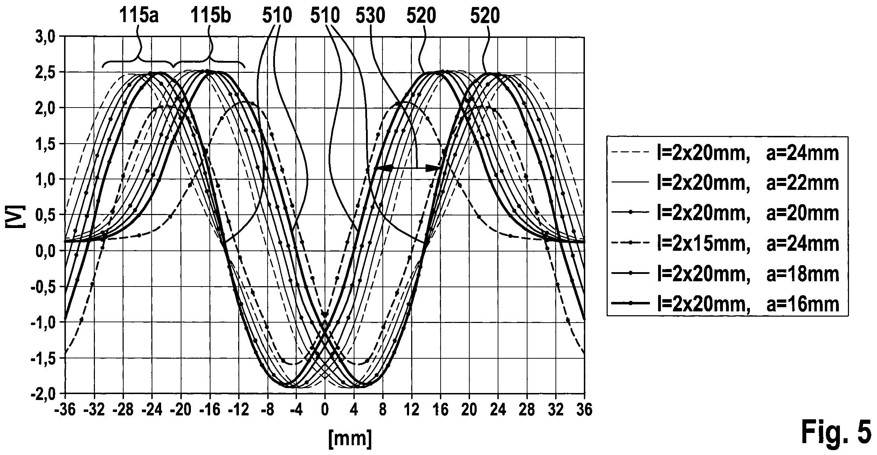

In Abhängigkeit von der Länge der beiden Weicheisenkerne 210a bzw. 210b in den Spulen und vom Abstand, den die beiden Weicheisenkerne 210a bzw. 210b voneinander haben (bei einer Anordnung in einem Positionssensor gemäß der Darstellung aus Fig. 2), werden zwei Sensorsignale 115a bzw. 115b erhalten, wie sie Fig. 5 exemplarisch dargestellt sind. Dabei repräsentieren die unterschiedlichen Kurven entsprechend der Legende des Diagramms unterschiedliche Längen der Kerne 210 bei einem unterschiedlichen Abstand der Kerne zueinander. In dem Diagramm aus Fig. 5 ist dabei auf der Abszisse die Position in mm und auf der Ordinate die Signalamplitude in V aufgetragen. Aus der Darstellung der Fig. 5 sind vier für die Signalverarbeitung in der Sensorsignalverarbeitungseinheit 120 nutzbare Gradienten 510 zu erkennen, die eine ausreichend hohe Steilheit aufweisen, sodass bereits bei einer geringen Bewegung der Kerne 210 eine gut erfassbare Spannungsveränderung resultiert. Dabei wird als Erregung eine Rechteckspannung von $\pm 5V$ verwendet. Ferner ist aus dem Diagramm aus Fig. 5 zu erkennen, dass die beiden Sensorsignale 115a und 115b an unterschiedlichen Stellen ihre Maxima 520 aufweisen und einen Versatz 530 (Offset) zueinander haben.

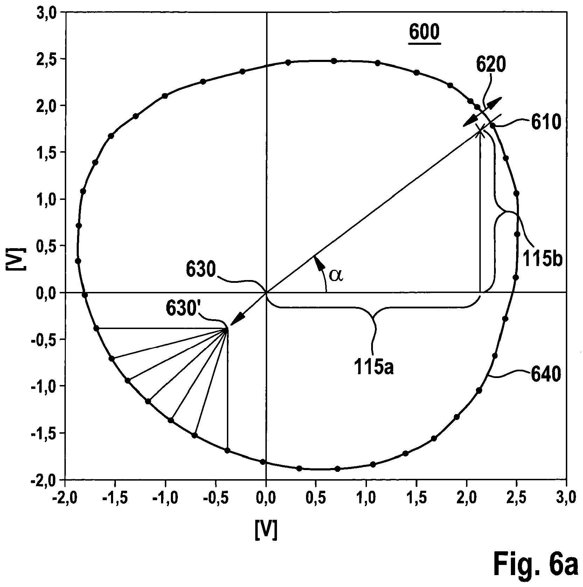

Die auf diese Weise nun bereitgestellten zwei Sensorsignale 115a und 115b werden dann in der Sensorsignalverarbeitungseinheit 120 weiter aufbereitet, um die physikalische Größe (vorliegend die Wegstrecke oder der Druck) bestimmen zu können. Hierzu wird ein Sensorsignalauswertungsraum 600 (Sensorsignalraum) gebildet, der vorliegend als Ebene (d.h. zweidimensional) ausgestaltet ist. Ein Wert des ersten Sensorsignals 115a wird als erste Koordinate auf der Abszisse aufgetragen und ein zur gleichen Zeit wie der Wert des ersten Sensorsignals 115a aufgezeichneter Wert des zweiten Sensorsignals 115b wird als Koordinate auf der Ordinate eines Diagramms im Sensorsignalauswertungsraum 600 aufgetragen. Diese Kombination von zeitgleich aufgezeichneten Werten des ersten und zweiten Sensorsignals 115a bzw. 115b bildet einen Sensorsignalauswertungspunkt 610, der nachfolgend weiter verarbeitet wird. Werden mehrere aufeinanderfolgende Kombinationen von Werten des ersten und zweiten Sensorsignals 115a bzw. 115b bei verschiedenen Positionen in ein solches Diagramm eingetragen, entstehen Sensorsignalauswertungspunkte 610, die in einer Form angeordnet sind, die der eines Kreises ähnelt, wie es aus der Fig. 6a ersichtlich ist. Weiterhin wird nun ein Referenzpunkt 630 im Sensorsignalauswertungsraum festgelegt, der günstigerweise in der Nähe des Flächenschwerpunktes, der sich durch die Verbindung aller Sensorsignalauswertungspunkte 610 ergebenden Figur 640 gewählt wird. Beispielsweise kann der Ursprung des Sensorsignalauswertungsraumes 600 gewählt werden, an dem das erste Sensorsignal 115a als auch das zweite Sensorsignal 115b einen Wert von null aufweisen. Weiterhin wird nun ein Winkel $\alpha$ ermittelt, den eine Verbindungslinie zwischen dem aktuellen Sensorsignalauswertungspunkt 610 und dem Referenzpunkt und der hier gewählten Referenzachse aufweist. Dieser "virtuelle" Winkel $\alpha$ wird beispielsweise mittels einer Signalfusion über eine Arctan-Funktion (Wert des zweiten Sensorsignals 115b / Wert des ersten Sensorsignals 115a) gebildet. Auf diese Weise kann ein Signalrauschen 620 in radiale Richtung (Doppelpfeil) kompensiert werden, sodass der SNR-Gewinn durch diese Maßnahme 3dB bzw. 0.5 Bit beträgt. Die exakte physikalische Größe wird nachfolgend unter Verwendung einer festen Kalibriertabelle bestimmt, bei der eine Abbildung eines Winkels $\alpha$ in eine vorbestimmte Ausprägung der zu messenden physikalischen Größe (hier eine Position) abgelegt ist (d. h. einer Tabelle mit der Zuordnung "$\alpha$ zu Position"). Durch eine Verschiebung des Referenzpunktes 630' auf einen anderen (beliebigen) Punkt lässt sich die Winkelauflösung für bestimmte Abschnitte der Kurve 640 relativ zu anderen Abschnitten der Kurve 640 erhöhen. Hierdurch lässt sich rechentechnisch die Winkelauflösung so verändern, dass der Gradient Winkel/Teilstrecke im gesamten Messbereich in gewissen Grenzen justiert werden kann. Der Winkel $\alpha$ kann somit als eine Sensorsignalauswertungsgröße verstanden werden.

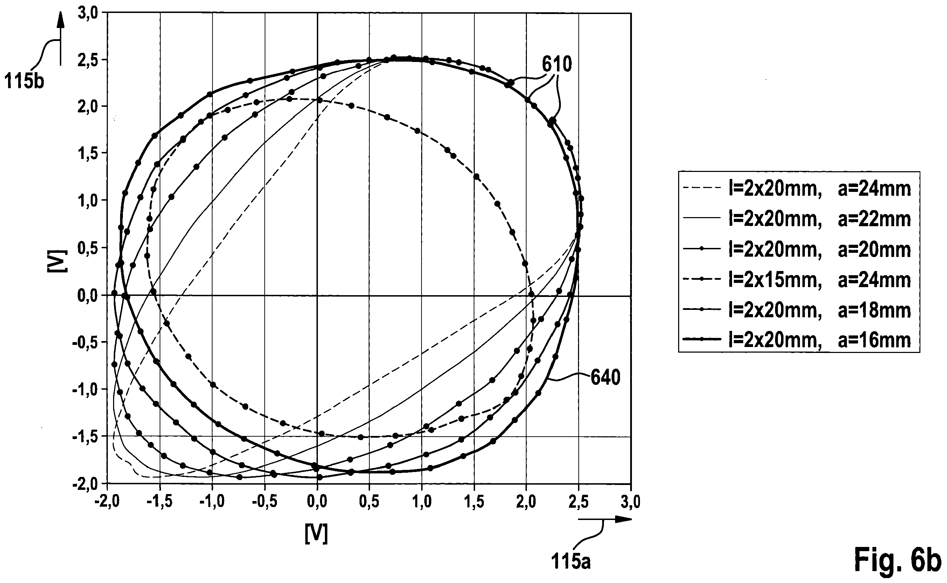

In der Fig. 6b sind weitere Figuren 640 dargestellt, die sich aus einer Verbindung von unterschiedlichen Sensorsignalauswertungspunkten 610 bei verschiedenen Längen der Kerne 210 und unterschiedlichen Abständen der Kerne 210 zueinander ergeben. Es ist aus der Fig. 6b zu erkennen, dass die Formen jeweils mehr oder weniger einem Kreis oder einer Ellipse ähneln, sodass die Auswertung eines Winkels zur Kompensation eines radialen Rauschens auch bei der Anwendung auf derartige Formen funktioniert. Der Abstand der Stützpunkte (Sensorsignalauswertungspunkte 610) ist auf die physikalische Messstrecke bezogen äquidistant, wobei ein Gesamtsignalhub im vorliegenden Fall um einen Faktor von etwa 3 größer ist, als die Amplitude eines der Sensorsignale einzeln betrachtet.

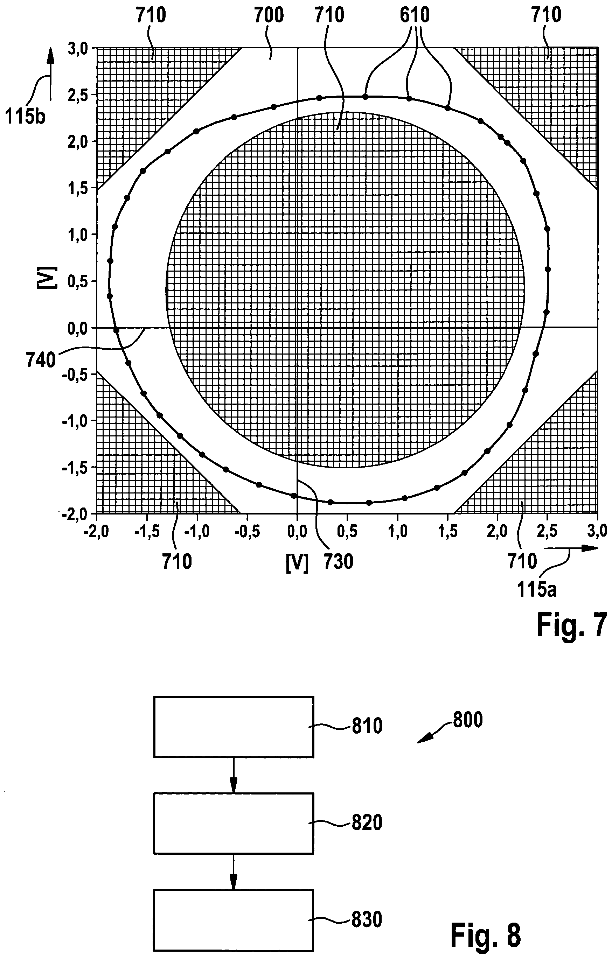

Weiterhin lässt sich der vorstehend beschriebene Ansatz auch zur Verifizierung der Gültigkeit einer bestimmten physikalischen Größe einsetzen. Hierzu ist zu überprüfen, ob der Signalauswertungspunkt 610 innerhalb eines Gültigkeitsbereichs 710 liegt, wie er in der Darstellung eines Signalraumes gemäß Fig. 7 als nicht-schraffierter Bereich eingezeichnet ist. Umgekehrt bedeutet dies, dass ein Fehler in der Auswertung oder Aufzeichnung der Sensorsignale vorliegt, wenn ein Sensorsignalauswertungspunkt 610 in einem Ungültigkeitsbereich 720 liegt, der in der Fig. 7 schraffiert eingezeichnet ist. In diesem Fall weist zumindest eine der zumindest zwei Komponenten, die die Lage des Signalauswertungspunkts 610 im Signalauswertungsraum 600 bezeichnen, einen zu großen oder zu kleinen Wert auf, bezogen auf den Wert der zumindest einen anderen Komponente. Weist beispielsweise die Leitung, die das erste Sensorsignal 115a zur Sensorsignalverarbeitungseinheit führt, einen Leitungsbruch auf, sodass das erste Sensorsignals 115a nicht mehr zur Schnittstelle 130 der Sensorsignalverarbeitungseinheit 120 übertragen werden kann, wird in der Sensorsignalverarbeitungseinheit 120 beispielsweise ein Wert des ersten Sensorsignals 115a von null angenommen, so dass sich auch bei fehlerfreiem Einlesen des zweiten Sensorsignals 115b im Sensorsignalauswertungsraum 600 eine Kennlinie 640 ergibt, die auf eine in der Fig. 7 senkrecht verlaufende Gerade 720 reduziert ist. Wird andererseits die Signalübertragung des zweiten Sensorsignals 115b unterbrochen, resultiert im Sensorsignalauswertungsraum 600 eine Kennlinie 640, die auf eine in der Fig. 7 waagrecht verlaufende Gerade 730 reduziert ist. In denjenigen Bereichen der Geraden 730 bzw. 740, in denen die betreffenden Geraden in dem Ungültigkeitsbereich verlaufen, kann davon ausgegangen werden, dass ein Fehler bei der Sensorsignalerfassung bzw. -auswertung aufgetreten ist. Auch kann beispielsweise eine Verschiebung oder Veränderung des Versatzes zwischen dem ersten und zweiten Sensorsignal 115a bzw. 115b erkannt werden, da in diesem Fall die Form der Kurve 640 verändert wird und die Kurve 640 mit hoher Wahrscheinlichkeit in einem oder mehreren Abschnitten in den Ungültigkeitsbereich 710 eintritt, sodass ein Fehler bei der Signalauswertung der beiden Sensorsignale 115a bzw. 115b erkannt werden kann. In diesen vorstehend beschriebenen Fehlerfällen kann somit eine Bestimmung einer physikalischen Größe auf der Basis der fehlerhaften Sensorsignale verhindert oder zumindest als fehlerhaft identifiziert werden. Insofern kann auch der Sensorsignalauswertungspunkt als Sensorsignalauswertungsgröße verstanden werden.

Die Ungültigkeitsbereiche 710, die kennzeichnen, dass ein Sensorsignalauswertungspunkt 610 unter Verwendung von fehlerhaften Sensorsignalen 115a bzw. 115b oder einer fehlerhaften Kombination der Sensorsignale zustande gekommen ist, kann beispielsweise durch die Verwendung von mathematischen Ungleichungen folgendermaßen bestimmt werden (wobei zur Vereinfachung in den Ungleichungen die Variable x für einen Wert des ersten Sensorsignals 115a und die Variable y für einen Wert des zweiten Sensorsignals 115b verwendet wird):

Für den Innenkreis:

$$(x - A)^2 + (y - B)^2 < C^2,$$

wobei A und B die Koordinaten des Kreismittelpunktes und

C den Radius repräsentieren;

Für den Außenkreis mit größerem Radius entsprechen die Ungleichung den zuvor dargestellten Ungleichungen analog, jedoch mit umgekehrten Relationszeichen;

Für die Ecken:

$$Dx + Ey > F;\ Gx + Hy < I$$

$$Jx +- Ky > L;\ mX - Ny < O$$

Für die Senkrechten:

$$x > R;\ x < S;$$

Für die Waagrechten:

$$y > P;\ y < Q$$

Wobei die Variablen A bis Q Parameter repräsentieren. Kreise können ferner auch durch (schiefe) Ellipsen ersetzt werden.

Um festzustellen, dass die zu bestimmende physikalische Größe auf der Basis von fehlerfreien Sensorsignalen bestimmt wurde, ist eine kontinuierliche Prüfung auf eine Lage des Sensorsignalauswertungspunktes im Sensorsignalraum 600 durchzuführen.

Fig. 8 zeigt ein Ablaufdiagramm eines Ausführungsbeispiels der vorliegenden Erfindung als Verfahren 800 zur Verarbeitung zumindest eines Sensorsignals. Das Verfahren 800 weist einen Schritt des Einlesens 810 eines ersten Sensorsignals und zweiten Sensorsignals auf, wobei das erste und das zweite Sensorsignal eine identische physikalische Größe repräsentieren und wobei bei einem ersten Wert der physikalischen Größe das erste Sensorsignal ein Maximum aufweist und bei einem vom ersten Wert unterschiedlichen zweiten Wert der physikalischen Größe das zweite Sensorsignal ein Maximum aufweist. Ferner umfasst das Verfahren 800 einen Schritt des Ermitteins 820 einer Sensorsignalauswertungsgröße auf der Basis einer ersten und einer zweiten Komponente, wobei die erste Komponente der Sensorsignalauswertungsgröße durch einen Signalwert des ersten Sensorsignals gebildet ist und die zweite Komponente der Sensorsignalauswertungsgröße durch einen Signalwert des zweiten Sensorsignals gebildet ist, wobei der erste und der zweite Signalwert zu einem identischen Zeitpunkt aufgenommen wurden. Auch umfasst das Verfahren 800 einen Schritt des Bestimmens 830 der dem ersten und zweiten Sensorsignal zugrunde liegende physikalische Größe unter Verwendung der Sensorsignalauswertungsgröße.

Die gezeigten Ausführungsbeispiele sind nur beispielhaft gewählt und können miteinander kombiniert werden.

Bezugszeichenliste

| | |
|---|---|
| 100 | Sensoreinheit |
| 110 | Sensorsystem |
| 115a,b | Sensorsignale |
| 120 | Sensorsignalverarbeitungseinheit |
| 130 | Schnittstelle |
| 140 | Sensorsignalaufbereitungseinheit |
| 150 | Sensorsignalauswertungseinheit |
| | |
| 200a-d | Spulen, Induktivitäten |
| 210a-b | Weicheisenkern, ferromagnetisches Material |
| 220 | Bewegungsrichtung |
| 230a-b | Serienschaltung |
| | |
| 400 | Druckraum, fluidische Verbindung |
| 410 | Druckmessdose |
| | |
| 510 | verwendbare Gradienten |
| 520 | Maxima |
| 530 | Offset, Versatz |
| | |
| 600 | Sensorsignalraum |
| 610 | Sensorsignalauswertungspunkt |
| 620 | radiales Rauschen |
| 630 | Referenzpunkt |
| 630' | verschobener Referenzpunkt |
| 640 | Figur, Kurve |
| | |
| 700 | Gültigkeitswertebereich |
| 710 | Ungültigkeitswertebereich |
| 730 | senkrechte Gerade |
| 740 | waagrechte Gerade |

800      Verfahren zur Verarbeitung eines Sensorsignals
810      Schritt des Einlesens
820      Schritt des Ermittelns
830      Schritt des Bestimmens

**Patentansprüche**

1. Sensorsignalverarbeitungseinheit (120) mit folgenden Merkmalen:

   - einer Schnittstelle (130) zum Einlesen eines ersten Sensorsignals (115a) und zweiten Sensorsignals (115b), wobei das erste (115a) und das zweite (115b) Sensorsignal eine identische physikalische Größe repräsentieren und wobei bei einem ersten Wert der physikalischen Größe das erste Sensorsignal (115a) ein Maximum (520) aufweist und bei einem vom ersten Wert unterschiedlichen zweiten Wert der physikalischen Größe das zweite Sensorsignal (115b) ein Maximum (520) aufweist;
   - einer Sensorsignalaufbereitungseinheit (140), die ausgebildet ist, um eine Sensorsignalauswertungsgröße (610, $\alpha$) auf der Basis einer ersten und einer zweiten Komponente zu ermitteln, wobei die erste Komponente der Sensorsignalauswertungsgröße (610, $\alpha$) durch einen Signalwert des ersten Sensorsignals (115a) gebildet ist und die zweite Komponente der Sensorsignalauswertungsgröße (610, $\alpha$) durch einen Signalwert des zweiten Sensorsignals (115b) gebildet ist, wobei der erste und der zweite Signalwert zu einem identischen Zeitpunkt aufgenommen wurden, wobei die Sensorsignalauswertungsgröße einen Sensorsignalauswertungspunkt in einem Sensorsignalraum als ein Tupel von zumindest zwei Werten darstellt, die zusammen einen Abbildungspunkt in einer zweidimensionalen Ebene oder einem mehrdimensionalen Raum repräsentieren; und
   - einer Sensorsignalauswertungseinheit (150), die ausgebildet ist, um die dem ersten (115a) und zweiten (115b) Sensorsignal zugrunde liegende physikalische Größe unter Verwendung der Sensorsignalauswertungsgröße (610, $\alpha$) zu ermitteln.

2. Sensorsignalverarbeitungseinheit (120) gemäß Anspruch 1, **dadurch gekennzeichnet, dass** die Sensorsignalaufbereitungseinheit (140) ausgebildet ist, um als erstes (115a) und zweites (115b) Sensorsignal Sensorsignale zu verwenden, die eine gleiche Form aufweisen, wobei die Sensorsignale (115a, 115b) jedoch einen Versatz zueinander aufweisen.

3. Sensorsignalverarbeitungseinheit (120) gemäß einem der vorangegangen Ansprüche, **dadurch ge-**

**kennzeichnet, dass** die Sensorsignalauswertungseinheit (150) ausgebildet ist, um als Sensorsignalauswertungsgröße (610, $\alpha$) einen Winkel (a) zwischen einem Sensorsignalauswertungspunkt (610) in einem Sensorsignalraum (600) und einem Referenzpunkt (630) im Sensorsignalraum (600) in Bezug zu einer Referenzachse durch den Referenzpunkt zu bestimmen, insbesondere wobei der Sensorsignalraum (600) durch das erste (115a) und zweite (115b) Sensorsignal aufgespannt werden und die erste Komponente eine erste Koordinate des Sensorsignalauswertungspunkts (610) und die zweite Komponente eine zweite Koordinate des Sensorsignalauswertungspunkts (610) bilden, insbesondere wobei im Referenzpunkt (630) der Wert des ersten und zweiten Sensorsignals null beträgt, und wobei die Sensorsignalauswertungseinheit (150) ausgebildet ist, um die physikalische Größe unter Verwendung des bestimmten Winkels (a) zu ermitteln.

4. Sensorsignalverarbeitungseinheit (120) gemäß Anspruch 3, **dadurch gekennzeichnet, dass** die Sensorsignalauswertungseinheit (150) ausgebildet ist, um den Winkel (a) unter Verwendung einer trigonometrischen Funktion, insbesondere unter Verwendung einer Tangensfunktion zu ermitteln.

5. Sensorsignalverarbeitungseinheit (120) gemäß einem der vorangegangenen Ansprüche, **dadurch gekennzeichnet, dass** die Sensorsignalauswertungseinheit (150) ausgebildet ist, um ein Sensorsignal oder eine bestimmte physikalische Größe als fehlerhaft zu identifizieren, wenn sich die Sensorsignalauswertungsgröße (610, $\alpha$) außerhalb eines vordefinierten Gültigkeitsbereichs (700) befindet.

6. Sensorsignalverarbeitungseinheit (120) gemäß einem Anspruch 5, **dadurch gekennzeichnet, dass** die Sensorsignalauswertungseinheit (150) ausgebildet ist, um die Sensorsignalauswertungsgröße (610, $\alpha$) als fehlerhaft zu identifizieren, wenn zumindest eine Komponente der Sensorsignalauswertungsgröße (610, $\alpha$) außerhalb eines Gültigkeitswertebereiches (700) liegt.

7. Sensoreinheit (100) mit folgenden Merkmalen:

   - einer ersten (200a) und einer zweiten (200b) Induktivität, die mit einem ersten beweglichen ferromagnetischen Element (210a) gekoppelt sind, wobei die erste und zweite Induktivität ausgebildet sind, um das erste Sensorsignal (115a) bereitzustellen;
   - einer dritten (200c) und einer vierten (200d) Induktivität, die die mit einem zweiten beweglichen ferromagnetischen Element (210b) gekoppelt sind, wobei die erste (200a) und zweite (200b) Induktivität ausgebildet sind, um das zweite (115b) Sensorsignal bereitzustellen, wobei das erste (210a) und zweite (210b) ferromagnetische Element derart angeordnet sind, um eine identische physikalische Größe zu erfassen und bei einer Änderung der physikalischen Größe als erstes (115a) und zweites (115b) Sensorsignal eine um einen Offset (530) versetze gleiche Form eines Sensorsignalverlaufes bereitzustellen; und
- einer Sensorsignalverarbeitungseinheit (120) gemäß einem der vorangegangenen Ansprüche.

8. Sensoreinheit (100) gemäß Anspruch 7, **dadurch gekennzeichnet, dass** die erste (200a) und zweite (200b) Induktivität in einer ersten Serienschaltung (230a) und die dritte (200c) und vierte (200d) Induktivität in einer zweiten (230b) Serienschaltung verschaltet sind, wobei die erste und zweite Serienschaltung parallel geschaltet sind.

9. Sensoreinheit (100) gemäß einem der Ansprüche 7 bis 8, **dadurch gekennzeichnet, dass** das erste (210a) und zweite (210b) ferromagnetische Element an einem gemeinsamen Stab befestigt ist.

10. Sensoreinheit (100) gemäß einem der Ansprüche 7 bis 8, **dadurch gekennzeichnet, dass** das erste (210a) und zweite (210b) ferromagnetische Element je an einer Druckkammer (410) befestigt ist.

11. Verfahren (800) zur Verarbeitung zumindest eines Sensorsignals, wobei das Verfahren (800) die folgenden Schritte aufweist:

- Einlesen (810) eines ersten Sensorsignals und zweiten Sensorsignals, wobei das erste und das zweite Sensorsignal eine identische physikalische Größe repräsentieren und wobei bei einem ersten Wert der physikalischen Größe das erste Sensorsignal ein Maximum aufweist und bei einem vom ersten Wert unterschiedlichen zweiten Wert der physikalischen Größe das zweite Sensorsignal ein Maximum aufweist;
- Ermitteln (820) einer Sensorsignalauswertungsgröße auf der Basis einer ersten und einer zweiten Komponente, wobei die erste Komponente der Sensorsignalauswertungsgröße durch einen Signalwert des ersten Sensorsignals gebildet ist und die zweite Komponente der Sensorsignalauswertungsgröße durch einen Signalwert des zweiten Sensorsignals gebildet ist, wobei der erste und der zweite Signalwert zu einem identischen Zeitpunkt aufgenommen wurden, wobei die Sensorsignalauswertungsgröße einen Sensorsignalauswertungspunkt in einem Sensorsignalraum als ein Tupel von zumindest zwei Werten darstellt, die zusammen einen Abbildungspunkt in einer zweidimensionalen Ebene oder einem mehrdimensionalen Raum repräsentieren; und
- Bestimmen (830) der dem ersten und zweiten Sensorsignal zugrunde liegenden physikalische Größe unter Verwendung der Sensorsignalauswertungsgröße.

12. Computerprogramm mit Programmcode zur Durchführung des Verfahrens (800) gemäß Anspruch 11, wenn das Computerprogramm auf einer Sensorsignalverarbeitungseinheit (120), einer Vorrichtung oder einer Datenverarbeitungsanlage ausgeführt wird.

## Claims

1. Sensor signal processing unit (120) having the following features:

- an interface (130) for reading in a first sensor signal (115a) and a second sensor signal (115b), wherein the first sensor signal (115a) and the second sensor signal (115b) represent an identical physical variable, and wherein the first sensor signal (115a) has a maximum (520) for a first value of the physical variable and the second sensor signal (115b) has a maximum (520) for a second value of the physical variable that differs from the first value;
- a sensor signal conditioning unit (140) which is designed to determine a sensor signal evaluation variable (610, $\alpha$) on the basis of a first component and a second component, wherein the first component of the sensor signal evaluation variable (610, $\alpha$) is formed by a signal value of the first sensor signal (115a) and the second component of the sensor signal evaluation variable (610, $\alpha$) is formed by a signal value of the second sensor signal (115b), wherein the first and second signal values were recorded at an identical time, wherein the sensor signal evaluation variable represents a sensor signal evaluation point in a sensor signal space as a tuple of at least two values which together represent a mapping point in a two-dimensional plane or a multidimensional space; and
- a sensor signal evaluation unit (150) which is designed to determine the physical variable on which the first sensor signal (115a) and the second sensor signal (115b) are based using the sensor signal evaluation variable (610, $\alpha$).

2. Sensor signal processing unit (120) according to Claim 1, **characterized in that** the sensor signal conditioning unit (140) is designed to use, as the first sensor signal (115a) and the second sensor signal (115b), sensor signals having an identical form, wherein the sensor signals (115a, 115b) have an offset with respect to one another, however.

3. Sensor signal processing unit (120) according to one of the preceding claims, **characterized in that** the sensor signal evaluation unit (150) is designed to determine, as the sensor signal evaluation variable (610, a), an angle ($\alpha$) between a sensor signal evaluation point (610) in a sensor signal space (600) and a reference point (630) in the sensor signal space (600) with respect to a reference axis through the reference point, in particular wherein the sensor signal space (600) is spanned by the first sensor signal (115a) and the second sensor signal (115b), and the first component forms a first coordinate of the sensor signal evaluation point (610) and the second component forms a second coordinate of the sensor signal evaluation point (610), in particular wherein the value of the first and second sensor signals is zero at the reference point (630), and wherein the sensor signal evaluation unit (150) is designed to determine the physical variable using the determined angle ($\alpha$).

4. Sensor signal processing unit (120) according to Claim 3, **characterized in that** the sensor signal evaluation unit (150) is designed to determine the angle ($\alpha$) using a trigonometric function, in particular using a tangent function.

5. Sensor signal processing unit (120) according to one of the preceding claims, **characterized in that** the sensor signal evaluation unit (150) is designed to identify a sensor signal or a particular physical variable as incorrect if the sensor signal evaluation variable (610, $\alpha$) is outside a predefined validity range (700).

6. Sensor signal processing unit (120) according to Claim 5, **characterized in that** the sensor signal evaluation unit (150) is designed to identify the sensor signal evaluation variable (610, $\alpha$) as incorrect if at least one component of the sensor signal evaluation variable (610, $\alpha$) is outside a validity range of values (700).

7. Sensor unit (100) having the following features:

   - a first inductance (200a) and a second inductance (200b) which are coupled to a first movable ferromagnetic element (210a), wherein the first and second inductances are designed to provide the first sensor signal (115a);
   - a third inductance (200c) and a fourth inductance (200d) which are coupled to a second movable ferromagnetic element (210b), wherein the first inductance (200a) and the second inductance (200b) are designed to provide the second sensor signal (115b), wherein the first ferromagnetic element (210a) and the second ferromagnetic element (210b) are arranged so as to capture an identical physical variable and, in the event of a change in the physical variable, to provide, as the first sensor signal (115a) and the second sensor signal (115b), an identical form of a signal profile which is offset by an offset (530); and
   - a sensor signal processing unit (120) according to one of the preceding claims.

8. Sensor unit (100) according to Claim 7, **characterized in that** the first inductance (200a) and the second inductance (200b) are connected in a first series circuit (230a) and the third inductance (200c) and the fourth inductance (200d) are connected in a second series circuit (230b), wherein the first and second series circuits are connected in parallel.

9. Sensor unit (100) according to one of Claims 7 to 8, **characterized in that** the first ferromagnetic element (210a) and the second ferromagnetic element (210b) are fastened to a common rod.

10. Sensor unit (100) according to one of Claims 7 to 8, **characterized in that** the first ferromagnetic element (210a) and the second ferromagnetic element (210b) are each fastened to a pressure chamber (410) .

11. Method (800) for processing at least one sensor signal, wherein the method (800) has the following steps:

   - reading in (810) a first sensor signal and a second sensor signal, wherein the first sensor signal and the second sensor signal represent an identical physical variable, and wherein the first sensor signal has a maximum for a first value of the physical variable and the second sensor signal has a maximum for a second value of the physical variable that differs from the first value;
   - determining (820) a sensor signal evaluation variable on the basis of a first component and a second component, wherein the first component of the sensor signal evaluation variable is formed by a signal value of the first sensor signal and the second component of the sensor signal evaluation variable is formed by a signal value of the second sensor signal, wherein the first and second signal values were recorded at an identical time, wherein the sensor signal evaluation variable represents a sensor signal evaluation point in a sensor signal space as a tuple of at least two values which together represent a mapping point in a two-dimensional plane or a multidimensional space; and

- determining (830) the physical variable on which the first sensor signal and the second sensor signal are based using the sensor signal evaluation variable.

12. Computer program having program code for carrying out the method (800) according to Claim 11 when the computer program is executed on a sensor signal processing unit (120), an apparatus or a data processing system.

**Revendications**

1. Unité de traitement de signal de capteur (120) comportant les caractéristiques suivantes :

- une interface (130) de lecture d'un premier signal de capteur (115a) et d'un deuxième signal de capteur (115b), le premier (115a) et le deuxième (115b) signal de capteur représentant une même grandeur physique et le premier signal de capteur (115a) ayant un maximum (520) pour une première valeur de la grandeur physique et le deuxième signal de capteur (115b) ayant un maximum (520) pour une deuxième valeur de la grandeur physique, qui est différente de la première valeur ;
- une unité de préparation de signal de capteur (140) qui est conçue pour déterminer une grandeur d'évaluation de signal de capteur (610, $\alpha$) sur la base d'une première et d'une deuxième composante, la première composante de la grandeur d'évaluation de signal de capteur (610, $\alpha$) étant formée par une valeur de signal du premier signal de capteur (115a) et la deuxième composante de la grandeur d'évaluation de signal de capteur (610, $\alpha$) étant formée par une valeur de signal du deuxième signal de capteur (115b), la première et la deuxième valeur de signal ayant été enregistrées à un même instant, la grandeur d'évaluation de signal de capteur représentant un point d'évaluation de signal de capteur dans un espace de signal de capteur sous la forme d'un n-uplet d'au moins deux valeurs qui représentent ensemble un point d'application dans un plan bidimensionnel ou un espace multidimensionnel ; et
- une unité d'évaluation de signal de capteur (150) qui est conçue pour déterminer la grandeur physique, sur laquelle les premier (115a) et deuxième (115b) signal de capteur sont basés, à l'aide de la grandeur d'évaluation de signal de capteur (610, $\alpha$).

2. Unité de traitement de signal de capteur (120) selon la revendication 1, **caractérisée en ce que** l'unité de traitement de signal de capteur (140) est conçue pour utiliser comme premier (115a) et deuxième (115b) signal de capteur des signaux de capteur qui ont la même forme, les signaux de capteur (115a, 115b) étant cependant décalés l'un par rapport à l'autre.

3. Unité de traitement de signal de capteur (120) selon l'une des revendications précédentes, **caractérisée en ce que** l'unité d'évaluation de signal de capteur (150) est conçue pour déterminer une grandeur d'évaluation de signal de capteur (610, $\alpha$), un angle ($\alpha$) entre un point d'évaluation de signal de capteur (610) dans un signal de capteur (600) et un point de référence (630) dans l'espace de signal de capteur (600) par rapport à un axe de référence passant par le point de référence, en particulier l'espace de signal de capteur (600) étant couvert par le premier (115a) et le deuxième (115b) signal de capteur et le premier composant formant une première coordonnée du point d'évaluation de signal de capteur (610) et le deuxième composant formant une deuxième coordonnée du point d'évaluation de signal de capteur (610), en particulier la valeur du premier et du deuxième signal de capteur étant nulle au point de référence (630), et l'unité d'évaluation de signal de capteur (150) étant conçue pour déterminer la grandeur physique à l'aide de l'angle déterminé (a).

4. Unité de traitement de signal de capteur (120) selon la revendication 3, **caractérisée en ce que** l'unité d'évaluation de signal de capteur (150) est conçue pour déterminer l'angle (a) à l'aide d'une fonction trigonométrique, notamment à l'aide d'une fonction tangente.

5. Unité de traitement de signal de capteur (120) selon l'une des revendications précédentes, **caractérisée en ce que** l'unité d'évaluation de signal de capteur (150) est conçue pour identifier un signal de capteur ou une grandeur physique déterminée comme défectueux si la grandeur d'évaluation de signal de capteur (610, $\alpha$) est située en dehors d'une gamme de validité prédéfinie (700).

6. Unité de traitement de signal de capteur (120) selon la revendication 5, **caractérisée en ce que** l'unité d'évaluation de signal de capteur (150) est conçue pour identifier la grandeur d'évaluation de signal de capteur (610, a) comme défectueuse si au moins une composante de la grandeur d'évaluation de signal de capteur (610, $\alpha$) se trouve en dehors d'une gamme de valeurs de validité (700).

7. Unité de capteur (100) comportant les caractéristiques suivantes :

- une première (200a) et une deuxième (200b) inductance qui sont couplées à un premier élément ferromagnétique mobile (210a), la première et la deuxième inductance étant conçues pour fournir le premier signal de capteur (115a) ;
- une troisième (200c) et une quatrième (200d) inductance qui sont couplées à un deuxième élément ferromagnétique mobile (210b), la première (200a) et la deuxième (200b) inductance étant conçues pour fournir le deuxième (115b) signal de capteur, le premier (210a) et le deuxième (210b) élément ferromagnétique étant disposés de manière à détecter une même grandeur physique et fournissant, lorsque la grandeur physique change, comme premier (115a) et deuxième (115b) signal de capteur une même forme de courbe de signal de capteur qui est décalée d'un décalage (530) ; et

une unité de traitement de signal de capteur (120) selon l'une des revendications précédentes.

8. Unité de capteur (100) selon la revendication 7, **caractérisée en ce que** la première (200a) et la deuxième (200b) inductance sont montées dans un premier circuit série (230a) et la troisième (200c) et quatrième (200d) inductance sont montées dans un deuxième circuit série (230b), les première et deuxième circuits série étant montés en parallèle.

9. Unité de capteur (100) selon l'une des revendications 7 à 8, **caractérisée en ce que** le premier (210a) et le deuxième (210b) élément ferromagnétique sont chacun fixés à une tige commune.

10. Unité de capteur (100) selon l'une des revendications 7 à 8, **caractérisée en ce que** le premier (210a) et le deuxième (210b) élément ferromagnétique sont chacun fixés à une chambre de pression (410).

11. Procédé (800) de traitement d'au moins un signal de capteur, le procédé (800) comprenant les étapes suivantes :

- lire (810) un premier signal de capteur et un deuxième signal de capteur, le premier et le deuxième signal de capteur représentant une même grandeur physique et le premier signal de capteur ayant un maximum à une première valeur de la grandeur physique et le deuxième signal de capteur ayant un maximum à une deuxième valeur de la grandeur physique qui est différente de la première valeur ;
- déterminer (820) une grandeur d'évaluation de signal de capteur sur la base d'une première et d'une deuxième composante, la première composante de la grandeur d'évaluation de signal de capteur étant formée par une valeur de signal du premier signal de capteur et la deuxième composante de la grandeur d'évaluation de signal de capteur étant formée par une valeur de signal du deuxième signal de capteur, la première et la deuxième valeur de signal ayant été enregistrées à un même instant, la grandeur d'évaluation de signal de capteur représentant un point d'évaluation de signal de capteur dans un espace de signal de capteur sous la forme d'un n-uplet d'au moins deux valeurs qui représentent ensemble un point d'application dans un plan bidimensionnel ou un espace multidimensionnel ; et
- déterminer (830) la grandeur physique, sur laquelle les premier et deuxième signaux de capteur sont basés, à l'aide de la grandeur d'évaluation de signal de capteur.

12. Logiciel comprenant un code de programme destiné à la mise en œuvre du procédé (800) selon la revendication 11, lorsque le programme d'ordinateur est exécuté sur une unité de traitement de signal de capteur (120), un dispositif ou un système de traitement de données.

112        112

110

115a              115b

100

130

140

120

150

**Fig. 1**

110   200a      200b      200c      200d

220   215

210a              210b

**Fig. 2**

**200a**    **200b**    **200c**    **200d**

**115a**    **230b**    **230a**    **115b**

A    B

**Fig. 3a**

A ⎯⎯⎯ $U_{err}$

B ⎯⎯⎯ $U_{err}$

**Fig. 3b**

Fig. 3c

**Fig. 4**

Fig. 5

Legend:
- - - - l=2x20mm, a=24mm
——— l=2x20mm, a=22mm
—•— l=2x20mm, a=20mm
-•- l=2x15mm, a=24mm
—•— l=2x20mm, a=18mm
—•— l=2x20mm, a=16mm

EP 2 623 936 B1

Fig. 6a

Fig. 6b

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0877464 A2
- DE 102011009720 A1
- US 5160886 A
- EP 1796257 A1
- FR 2923903 A1
- US 2004217758 A1
- EP 0997701 A2